# EUROPEAN PATENT SPECIFICATION

(11) **EP 1 271 002 B1**
(45) Date of publication and mention of the grant of the patent: **13.10.2004**
(21) Application number: 01202334.7
(22) Date of filing: 18.06.2001
(51) Int. Cl.: F16H 55/56

(54) **Continuously variable transmission and pulley**
Stufenloses Getriebe und Riemenscheibe
Transmission à variation continue et poulie

(43) Date of publication of application: 02.01.2003
(73) Proprietor: Van Doorne's Transmissie B.V., 5000 AM Tilburg (NL)
(72) Inventor: Van Spijk, Johannes Gerardus Ludovicus Maria, 5151 VT Drunen (NL)

(56) References cited:
- EP-A- 0 321 921
- EP-A- 0 560 427
- US-A- 6 089 999

## Description

The invention relates to a continuously variable transmission, in particular a pulley design therefor, as defined by the features of the preamble of claim 1.

Transmissions and pulleys of such kind are generally known and used. One such transmission and pulley is disclosed in EP-A-0 560 427, which is considered an improvement over US-A 3 948 111. The pulley of the latter document comprises a separate seal element or piston incorporating a resilient hinge between two concentric cylinder walls that are part of a pressure chamber. Such seal element and such hinging feature are of vital importance for the functioning of a pulley, and therewith of the entire transmission.

Pressure chambers, usually hydraulic, are incorporated for urging a pulley disc in axial direction so as to effect adequate clamping for and a radial shifting of a belt or other transmission element located between the two discs a pulley. Particularly when a relatively high torque is transmitted by the latter known pulley, problems may arise regarding the degree of stability of the pulley, and deformations can be observed which may affect the action of the transmission. It was the object of the invention according to EP-A-0 560 427 to provide an improved pulley, in particular a piston therefor, suitable for relatively high powers and whose stability and resistance to permanent deformation were improved.

To this end, the pulley according to EP-A-0 560 427 was characterised the presence of a resilient hinge in the wall material of the pressure chamber of the cylinder/piston means, with the result that, under the influence of any momentary relatively high pressure, the relevant wall can locally absorb forces in an elastic manner, in particular if the transmission transmits a high torque. The resilient hinge is in the known construction realised by a locally thinner section of the wall, in particular by a local recess therein. The absorption of the forces in this prior art construction is effected at a predetermined, known position of the resilient hinge, and in a predictable manner. In this proposition, the forces are absorbed locally by elastic deformation and by controlled expansion of the wall around the resilient hinge. Because the forces are to a large extent absorbed in an elastic manner by the wall with the resilient hinge, they are passed on to the supporting part, for example the supporting shaft on which the displaceable disc is mounted, in very much reduced form, as a result of which, under heavy load, clamping and deformation of the relevant part, in particular the sleeve of the moving sheave, forming a shaft, is prevented The stability and the resistance to permanent deformation, as well as the action of the transmission are therefore greatly improved.

In the known embodiment, the fixed connection is designed as a force fit, which has the advantage that, on the one hand, a fixed connection is achieved by combining the force fit and the closely adjacent resilient hinge, while, on the other hand, a certain degree of elastic deformation is possible without this resulting in permanent deformation.

Although the prior art construction performs satisfactorily it appears to be susceptible for further improvement, in particular for even higher forces in the pressure chamber as is consistent with nowadays tendency in transmission design. For instance, where the known design performed very well up to nominal chamber pressures up to 15 bar, it appeared to suffer from damage at nominal chamber pressures around 25 bar. Test results showed that the press fit of the wall on to the shaft lost its existence and the supporting face of the shaft was hammered by forceful contact with the wall as a result of rapidly changing pressure levels during operation, while leakage occurred.

It is thus an object of the present invention to provide a construction suitable for lastingly sustaining very high forces in the pressure chamber, at least less prone to the effects occurring with high pressures in the known construction, while still maintaining the favourable feature of hinging. In accordance with the invention such is realised with a principal design change in accordance with the features defined in the characterising portion of claim 1.

With the provision of a sleeve like foot part to the radial inner side of the wall and with uninterrupted smoothly formed wall faces, a hinge section is created in the piston, defined by the transition from wall to foot part. The construction with the foot part has for advantages that at the radial inner end portion of the axial outer side of the wall a relatively large section is available for taking up tensile stresses, thus creating a lower risk of exceeding the yield stress of the wall material and therewith lasting deformation. Simultaneously, it is realised that the axial end of the foot part away from radial extending wall is loaded by such resulting forces in a favourable manner, so that the press fit of the wall, in particular this foot part, has a high chance of being maintained during life time of the construction. Another advantage is that in principle no, at least significantly less hammering of the axial supporting face of the shaft will take place by the wall under changes in pressure load, since the hinging movement of the wall is displaced towards the region of the transition and only the foot part is in contact with the shaft. The latter is in the present construction in particular of significance, since the supporting face in this design functions as a positioning element for the wall at assembly and during operation. Such design is alternatively denoted positive connection of the wall and obviates the necessity of an additional recess in the shaft for staking the wall, thereby reducing manufacturing cost. In conformance herewith, in a preferred embodiment, of the present construction, securing the wall position by staking of the foot part on to said shaft part is omitted.

The invention will be explained in more detail, together with its further advantages, by way of example, with reference to the following drawing, in which identical reference numbers refer to corresponding construction parts, and in which:
Figure 1 shows a diagrammatic illustration of a known continuously variable transmission having a pulley of the type according to the invention, and in which a circled prior art detail of the transmission has been taken out and enlarged;
Figure 2 schematically represents the principle design according to the invention and manner in which it is incorporated in the transmission;
Figure 3 is a detailed representation of a first embodiment of the piston design according to the invention, and
Figure 4 is a representation in accordance with figure 3 of a second embodiment.

Throughout the present description reference to an axially outward direction or vice versa shall mean directed away from the disc 5 and vice versa respectively. Correspondingly reference to radial outward direction and vice verse shall mean directed away from the central axis of the relevant part and vice versa respectively.

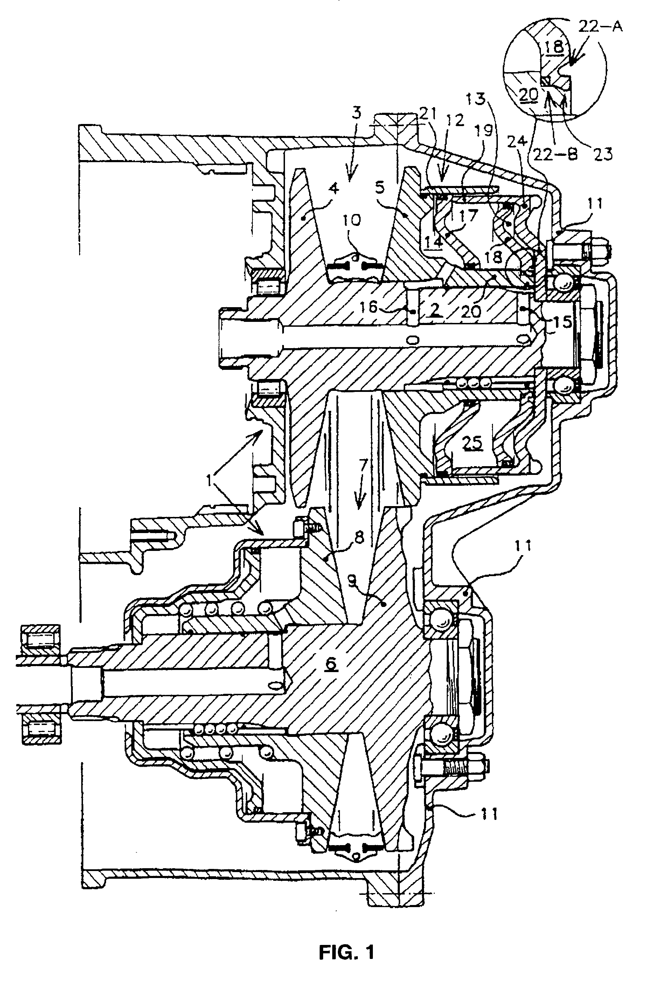

Figure 1 diagrammatically shows a continuously variable transmission 1, which is illustrated in part. The transmission 1 comprises a primary shaft 2, on which a primary pulley 3 is fitted in the form of discs 4 and 5, disc 5 being axially displaceable along the shaft 2 in a manner still to be specified. The transmission 1 furthermore comprises a secondary shaft 6, on which a secondary pulley 7 is fitted with discs 8 and 9, disc 8 of which may be displaced along the shaft 6. An endless drive belt, chain or belt 10 has been fitted around the pulleys 3 and 7, the path of the belt 10 between the sets of discs 4, 5; 8, 9 being variable and dependent on the axial position of the displaceable discs 5 and 8.

The primary shaft 2 is connected in a manner known per se to an engine (not shown) and the secondary shaft 6 is connected to the wheels of a vehicle (not shown)

Inside the partly illustrated housing 11 are fitted, in particular the, generally two, movable discs 5 and 8, and, in the remainder of this description, the disc 5 will be explained in more detail. The axially displaceable disc 5 comprises cylinder/piston means 12 which generally comprise at least one pressure chamber 14 In the embodiment shown, the transmission 1 comprises cylinder/piston means which comprise a further, second pressure chamber 13. However, it is possible that, under certain circumstances, as desired, providing the means 12 with a single pressure chamber is sufficient. The chamber 25 is unpressurised. A medium under pressure is supplied to and discharged from, in this case, both the chambers 13 and 14 through suitable passages 15 and 16, in order thereby to affect the axial position of disc 5. The pressure chamber 13 comprises essentially radially directed walls 18 and 24, in addition to cylindrical wall 19 and shaft 2. Wall 17 is displaceable between wall or hub 20 and cylinder wall 21 of the disc 5. In addition, wall 17 rests against the wall 19, while one end of wall 18 seals displaceable on cylindrical wall 19 and, in this embodiment, is connected by its other, circled end to hub 20 of the disc 5. Wall 18 is also referred to as the piston 18 of a cylinder piston means.

The enlarged detail shows that, at the position of the point where the walls 18 and 20 are connected to one another, there is in the prior art construction a resilient hinge 22 which in this prior art design has the form of a recess 22A outside the wall and a recess 22B at the inner diameter and inner side of the wall. Thus, wall 18 can deform flexibly. In the enlarged detail, items 18 and 20 are represented in a position at some distance from wall 24.

In the prior art and presently preferred embodiment, the connection between the items 18 and 20 at the side closest to the construction 22A, 22B is effected by means of a force fit. The force fit is preferably of such elastic design that the narrow clearance of hub or wall 20 is maintained and wall 20 remains displaceable relative to the shaft 2.

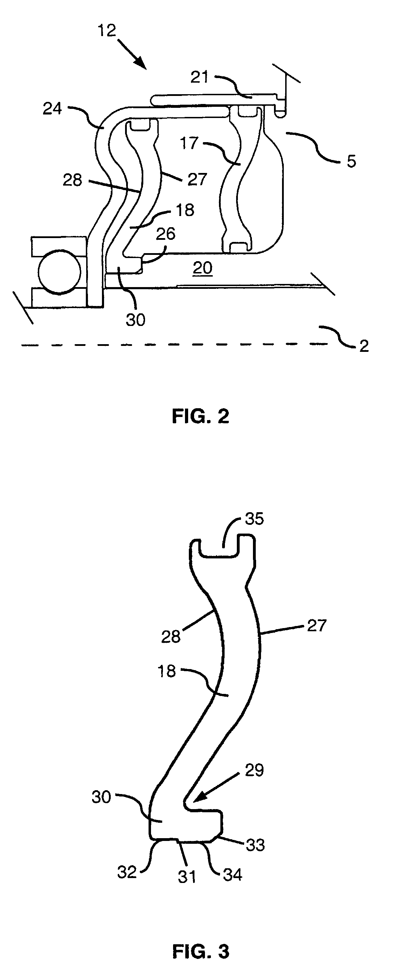

Figure 2, by part of a transmission section and mirrored relative to figure 1, shows the piston 18 according to the invention incorporated in a pulley, in casu the primary pulley. The wall 18 according to the invention has a foot part 30, which abuts a supporting face in the form of radial wall part 26 of a shaft, in casu embodied the sleeve or hub 20 of disc 5. It shows the inner face or side 27 and the outer face 28 of the wall 18 to be smoothly extending as seen in cross section, at least to the radial inner portion thereof, i.e. without interrupting recesses like recesses 22A and 22B of the prior art design.

Figure 3 in detail represents the piston according to the invention, with a curvedly shaped transition, or hinging section 29 between the inner wall side 27 and the foot part 30. To effect a localised hinging at the location of the transition of the wall 18 and the foot part 30, it is suggested to locally adopt the smallest width of the wall as measured perpendicular to a radially and tangentially extending centre plane of the wall and/or by providing the inner wall side 27 at the location of the hinging transition section 29 with a relatively small radius of curvature. Here such curvature of the transition section 29 has a radius of about 0.8 mm, which is within a preferred range from 0.7 mm to 1.25 mm. Preferably the foot part 30 has a length of more than one and a half times, the thickness occurring over the largest portion of the wall 18. More preferably the foot part 30 should extend axially as long as possible, e.g. over the entire axial length of the axial stroke of the neighbouring wall 17, i.e. virtually over the entire axial length of the pressure chamber 14. Thus the foot part 30 would than bear wall 17. A radially inner end of the foot part 30 has a recess 32 of small radial extension starting at an axial point 31. Point 31 is preferably located to the left of the transition section 29 as depicted in figures 2 and 3, i.e. axially outward therefrom. By this provision it is secured that a press fit section 34 of the foot part of the piston 18 is located to axially towards the disc 5 to the right of point 31 in figure 3, i.e. axially inward. Any deformations occurring under pressure loads in the environment of the transition section 29, in particular a pressure in the cylinder space between cylinder 24 and piston 18, which cause a tilting tendency of the foot part 30, whereby the foot 30 is radially lifted slightly at the location of recess 32 with respect to section 34, result in a tightening of the press fit, rather than a relieving thereof that could occur when such fit would be -also- realised at the axial location of the recess 32. In other words, the recess 32 further aids in determining the localisation of the hinging section of the wall 18, 24, i.e. in a section away from the section where in accordance with an aim of the invention, a stable and unaffected force fit of the wall is achieved, i.e. in the area at the radial inner part of the foot part 30, where the foot 30 is force fitted to the shaft 20.

The thickness of the foot 30 is slightly smaller than the radial height of the wall 26, thus minimising the effect of any residual hammering, on the wall 26 which might e.g. occur when the axial length of the foot part 30 is kept to a minimum and when the materials applied are qualitatively not of the most expensive kind. The effect includes the risk of material particles coming loose in the relevant pressure chamber, which might severely hamper if not damage the functioning of the piston/cylinder assembly, and therewith of the transmission. Particularly in the case the invention is applied at the wall 24, such smaller height also has a function in allowing the largest possible stroke of e.g. sleeve 20, i.e. allowing an overlap thereof with the foot part 30, without there being any chance of mutual contact therewith at the abutting face.

The foot part 30 may further be provided with a wall part 33 preferably extending under an angle α between 25 and 40 degrees with the press fit section 34 forming a small recess therein in the general square shape of the foot part 30 and promoting optimal press fitting by allowing for a possible transition edge in the shaft 2. In this embodiment, a radial innermost curvature on the outer wall side 28 transits to a lowest portion of the same side 28, extending straight and square relative to the foot part 30, at a radial location above the foot part 30, preferably at a distance less than the thickness of the wall 18. The piston may favourably be produced by sheet metal forming processes.

The invention apart from the contents of the following claims also relates to the preceding description and all details and aspects in the drawing which may not be described but which are directly and unambiguously derivable therefrom by a man skilled in the art.

## Claims

1. Continuously variable transmission (1), in particular a pulley therefor, comprising a set of pulleys (3, 7), each provided with a set of discs (4, 5; 8, 9) and fitted on one of a primary (2) and a secondary (6) shaft of the transmission, in which at least one disc (5; 8) is axially displaceable and provided with cylinder/piston means (12), which cylinder/piston means (12) comprise at least one pressure chamber (13) with radial walls (5, 17, 18, 24) and concentric cylinder walls (2, 20, 19, 21), and at least one of said radial walls (18) of the pressure chamber is secured to one of said concentric cylinder walls (20) by means of an immovable fit, radially either to a sleeve part (20) of a disc (5) or to a part of a shaft (2) and axially to a shoulder part (26) of said sleeve part (20) or of said shaft (2) respectively, which wall (18) near said fit is produced with a resilient hinge feature, **characterised in that** the resilient hinge feature of said wall (18) is realised with the inclusion of a sleeve like foot part (30), predominantly axially protruding relative to a lower portion of the wall (18) and integral thereto, and with one axial wall face (28) of said wall (18) extending uninterrupted smoothly up to its radially inner diameter and with another axial wall face (27) of said wall (18) uninterruptedly and smoothly extending radially inward to a transition section (29) between the predominantly radially extending wall part and the predominantly axially extending foot part (30) thereof.

2. Transmission according to claim 1, **characterised in that** the foot part (30) extends axially from the radially extending wall part towards a pulley disc (5).

3. Transmission according to claim 1 or 2, **characterised in that** the thickness of the foot part (30) in radial direction substantially conforms to a nominal thickness of the radially extending wall part of the wall (18) in axial direction.

4. Transmission according to any one of the preceding claims, **characterised in that** the axial length of the foot part (30), measured at its radial inner side, is more than one and a half times a nominal thickness of the radially extending wall part of the wall (18) in axial direction.

5. Transmission according to any one of the preceding claims, **characterised in that** an end face of the foot part (30) directed axially inward directed from the radially extending wall part towards a pulley disc (5) fittingly abuts to a supporting face (26) or shoulder part in the form of a radially outward extending wall part of the shaft of sleeve (2, 20).

6. Transmission according to the preceding claim, **characterised in that** the radial height of the foot part (30) is less than that of the supporting face (26) of the shaft of sleeve (2, 20).

7. Transmission according to any one of the preceding claims, **characterised in that** the foot part (30) at the radial inner, and axially outer side is provided with a recess (32), preferably largely rectangularly shaped, of which the radial extension is preferably small but noticeable, and which starts at a location axially outwardly beyond the transition (29) as seen from the axial wall face (27) towards the other axial wall face (28).

8. Transmission according to any one of the preceding claims, **characterised in that** a part of the radially extending wall part of the wall (18), at least near the transition (29) from the radially extending wall part to said foot part (30) is produced in a axial thickness smaller than a nominal thickness of the radially extending wall part of the wall (18) in axial direction, however, preferably larger than three quarters of the said nominal axial thickness.

9. Transmission according to the preceding claim, **characterised in that** the smaller axial thickness is realised by the smoothly shaped axial wall face (27) and the other axial wall face (28) of the wall (18) slightly converging to each other.

10. Transmission according to any one of the two preceding claims, **characterised in that** a smallest axial thickness of the wall (18) is realised at the transition section (29), which thereby is preferably provided smoothly curved.

11. Transmission according to any one of the preceding claims, **characterised in that** the radially inner side of the foot part (30) at an axial end thereof that is directed towards the axially displaceable disc 5 is recessed over a radial distance of about 1 mm, preferably such that the resulting recess is defined by a wall part (33) extending partly in radial direction under an angle of up to 40 degrees with general axial direction of the foot part (30).

12. Transmission according to any one of the preceding claims, **characterised in that** the transition section (29) is produced in a rounding with a radius of curvature equal to or larger than 0.5 mm, but less than 1.5 mm.

13. Transmission according to any one of the preceding claims, **characterised in that** the radially extending wall part of the wall (18), in radial outward direction from the foot part (30) thereof, over a substantial part of it's radial height is inclined towards the axially displaceable disc (5) of the pulley and, also over a substantial part of it's radial height, away from the said disc (5), whereby said wall part at the latter substantial part thereof does not extend away from the disc (5) beyond the transition section (29).

14. Transmission according to the preceding claim, **characterised in that** the foot part (30) axially extends up to a point within the axial extension of a radial outer recess (35) in the wall (18) for taking up a sealing ring, preferably ends in axial direction up to a point within the axial extension of the said axial wall surface (27).

15. Transmission according to any one of the preceding claims, **characterised in that** the said another axial wall surface (28) of the wall (18) in radial inward direction continues to be curved up to beyond the level of the radial outer circumference of the foot part (30).

16. Transmission according to any of the preceding claims, **characterised in that** the outer circumference of the shaft of sleeve (2, 20) at the location where the wall (18) is fitted is substantially uniform in diameter over the length of the foot part (30).

## Patentansprüche

1. Stufenloses Getriebe (1), insbesondere Riemenscheibe dafür, mit einem Satz von Riemenscheiben (3, 7), die jeweils mit einem Satz von Scheiben (4, 5; 8, 9) versehen und auf einer Primär- (2) oder einer Sekundär- (6) Welle des Getriebes angebracht sind, wobei mindestes eine Scheibe (5; 8) axial verschiebbar und mit Zylinder-/Kolben-Mitteln (12) versehen ist, wobei die Zylinder-/Kolben-Mittel (12) mindestens eine Druckkammer (13) mit radialen Wänden (5, 17, 18, 24) und konzentrischen Zylinderwänden (2, 20, 19, 21) umfassen und mindestens eine der radialen Wände (18) der Druckkammer mittels einer unbeweglichen Passung, radial entweder an einem Hülsenteil (20) einer Scheibe (5) oder einem Teil der Welle (2) und axial an einem Schulterteil (26) des Hülsenteils (20) bzw. der Welle (2), an einer der konzentrischen Zylinderwände (20) befestigt ist, wobei die Wand (18) in der Nähe der Passung mit einem elastischen Gelenkmerkmal hergestellt ist, **dadurch gekennzeichnet, dass** das elastische Gelenkmerkmal der Wand (18) dadurch realisiert ist, dass ein hülsenförmiges Fußteil (30), in erster Linie axial vorragend bezüglich eines unteren Teils der Wand (18) und integral damit, eingebaut ist und sich eine axiale Wandfläche (28) der Wand (18) ununterbrochen stetig nach oben bis zum radial inneren Durchmesser und eine andere axiale Wandfläche (27) der Wand (18) ununterbrochen und stetig radial nach innen zu einem Übergangsabschnitt (29) zwischen dem sich in erster Linie radial erstreckenden Wandteil und dem sich in erster Line axial erstreckenden Fußteil (30) davon erstreckt.

2. Getriebe nach Anspruch 1, **dadurch gekennzeichnet, dass** sich der Fußteil (30) von dem sich radial erstreckenden Wandteil axial zu einer Scheibe (5) einer Riemenscheibe erstreckt.

3. Getriebe nach Anspruch 1 oder 2, **dadurch gekennzeichnet, dass** die Dicke des Fußteils (30) in Radialrichtung im Wesentlichen einer Nenndicke des sich radial erstreckenden Wandteils der Wand (18) in Axialrichtung entspricht.

4. Getriebe nach einem der vorhergehenden Ansprüche, **dadurch gekennzeichnet, dass** die Axiallänge des Fußteils (30), gemessen an seiner radialen Innenseite, größer ist als das Eineinhalbfache einer Nenndicke des sich radial erstreckenden Wandteils (18) in Axialrichtung.

5. Getriebe nach einem der vorhergehenden Ansprüche, **dadurch gekennzeichnet, dass** eine Endfläche des Fußteils (30), die von dem sich radial erstreckenden Wandteil axial nach innen zu einer Scheibe (5) der Riemenscheibe gerichtet ist, passgenau an eine Stützfläche (26) oder an einen Schulterteil in Form eines sich radial nach außen erstreckenden Wandteils der Welle der Hülse (2, 20) anstößt.

6. Getriebe nach dem vorhergehenden Anspruch, **dadurch gekennzeichnet, dass** die radiale Höhe des Fußteils (30) kleiner ist als die der Stützfläche (26) der Welle der Hülse (2, 20).

7. Getriebe nach einem der vorhergehenden Ansprüche, **dadurch gekennzeichnet, dass** der Fußteil (30) an der radial inneren und axial äußeren Seite mit einer Aussparung (32) versehen ist, die vorzugsweise weitgehend rechteckig ausgebildet und deren radiale Erstreckung vorzugsweise klein, aber wahrnehmbar ist und die an einer Stelle beginnt, die, mit Blickrichtung von der axialen Wandfläche (27) zur anderen axialen Wandfläche (28), axial nach außen hinter dem Übergang (29) liegt.

8. Getriebe nach einem der vorhergehenden Ansprüche, **dadurch gekennzeichnet, dass** ein Teil des sich radial erstreckenden Wandteils der Wand (18), zumindest in der Nähe des Übergangs (29) von dem sich radial erstreckenden Wandteil zum Fußteil (30), in einer axialen Dicke hergestellt ist, die kleiner ist als eine Nenndicke des sich radial erstreckenden Wandteils der Wand (18) in Axialrichtung, jedoch vorzugsweise größer als Dreiviertel der axialen Nenndicke ist.

9. Getriebe nach dem vorhergehenden Anspruch, **dadurch gekennzeichnet, dass** die kleinere axiale Dicke dadurch realisiert wird, dass die stetig geformte axiale Wandfläche (27) und die andere axiale Wandfläche (28) der Wand (18) etwas zueinander konvergieren.

10. Getriebe nach einem der beiden vorhergehenden Ansprüche, **dadurch gekennzeichnet, dass** eine kleinste axiale Dicke der Wand (18) am Übergangsabschnitt (29) realisiert ist, der dadurch vorzugsweise stetig gekrümmt vorgesehen ist.

11. Getriebe nach einem der vorhergehenden Ansprüche, **dadurch gekennzeichnet, dass** die radial innere Seite des Fußteils (30) an einem axialen Ende davon, das zur axial verschiebbaren Scheibe (5) weist, über eine radiale Strecke von ca. 1 mm ausgespart ist, vorzugsweise derart, dass die sich ergebende Aussparung durch einen Wandteil (33) definiert wird, der sich in einem Winkel von bis zu 40 Grad mit allgemeiner axialer Richtung des Fußteils (30) teilweise in radialer Richtung erstreckt.

12. Getriebe nach einem der vorhergehenden Ansprüche, **dadurch gekennzeichnet, dass** der Übergangsabschnitt (29) in einer Krümmung mit einem Krümmungsradius von 0,5 mm oder darüber, aber unter 1,5 mm hergestellt ist.

13. Getriebe nach einem der vorhergehenden Ansprüche, **dadurch gekennzeichnet, dass** der sich radial erstreckende Wandteil der Wand (18) in einer radial nach außen verlaufenden Richtung vom Fußteil (30) davon über einen wesentlichen Teil seiner radialen Höhe zur axial verschiebbaren Scheibe (5) der Riemenscheibe geneigt ist, und des Weiteren über einen wesentlichen Teil seiner radialen Höhe von der Scheibe (5) weg geneigt ist, wodurch sich der Wandteil am letzteren wesentlichen Teil davon nicht über den Übergangsabschnitt (29) hinaus von der Scheibe (5) weg erstreckt.

14. Getriebe nach dem vorhergehenden Anspruch, **dadurch gekennzeichnet, dass** sich der Fußteil (30) axial bis zu einer Stelle in der Axialerstreckung einer radialen äußeren Aussparung (35) in der Wand (18) zur Aufnahme eines Dichtungsrings erstreckt und in Axialrichtung an einer Stelle in der Axialerstreckung der axialen Wandfläche (27) endet.

15. Getriebe nach einem der vorhergehenden Ansprüche, **dadurch gekennzeichnet, dass** sich die andere axiale Wandfläche (28) der Wand (18) in radial nach innen verlaufender Richtung weiter bis zu über der Höhe des radialen Außenumfangs des Fußteils (30) hinaus erstreckt.

16. Getriebe nach einem der vorhergehenden Ansprüche, **dadurch gekennzeichnet, dass** der Außenumfang der Welle der Hülse (2, 20) an der Stelle, an der die Wand (18) angebracht ist, über die Länge des Fußteils (30) einen im Wesentlichen gleichmäßigen Durchmesser aufweist.

## Revendications

1. Transmission à variation continue (1), en particulier une poulie pour celle-ci, comprenant un jeu de poulies (3, 7), dotées chacune d'un jeu de disques (4, 5; 8, 9) et montées sur un parmi un arbre primaire (2) et un arbre secondaire (6) de la transmission, dans laquelle au moins un disque (5; 8) est mobile axialement et doté de moyens de cylindre/piston (12), lesquels moyens de cylindre/piston (12) comprennent au moins une chambre de pression (13) avec des parois radiales (5, 17, 18, 24) et des parois cylindriques concentriques (2, 20, 19, 21), et au moins une desdites parois radiales (18) de la chambre de pression est fixée à une desdites parois cylindriques concentriques (20) au moyen d'un montage inamovible, radialement soit à une partie manchon (20) d'un disque (5) soit à une partie d'un arbre (2) et axialement à une partie épaulement (26) de ladite partie manchon (20) ou dudit arbre (2) respectivement, laquelle paroi (18) à proximité dudit montage est produite avec une fonction de pivot élastique, **caractérisée en ce que** la fonction de pivot élastique de ladite paroi (18) est réalisée avec l'inclusion d'une partie pied (30) de type manchon, saillant essentiellement axialement par rapport à une partie inférieure de la paroi (18) et intégrée à celle-ci, et avec une face de paroi axiale (28) de ladite paroi (18) s'étendant régulièrement de manière continue jusqu'à son diamètre radialement intérieur et avec une autre face de paroi axiale (27) de ladite paroi (18) s'étendant régulièrement et de manière continue radialement vers l'intérieur jusqu'à une section de transition (29) entre la partie paroi s'étendant essentiellement radialement et sa partie pied (30) s'étendant essentiellement axialement.

2. Transmission selon la revendication 1, **caractérisée en ce que** la partie pied (30) s'étend radialement depuis la partie paroi s'étendant axialement vers un disque de poulie (5).

3. Transmission selon la revendication 1 ou 2, **caractérisée en ce que** l'épaisseur de la partie pied (30), dans la direction radiale, correspond sensiblement à une épaisseur nominale de la partie paroi s'étendant radialement de la paroi (18) dans la direction axiale.

4. Transmission selon l'une quelconque des revendications précédentes, **caractérisée en ce que** la longueur axiale de la partie pied (30), mesurée de son côté intérieur radial, est supérieure à une fois et demi une épaisseur nominale de la partie paroi s'étendant radialement de la paroi (18) dans la direction axiale.

5. Transmission selon l'une quelconque des revendications précédentes, **caractérisée en ce qu'**une face terminale de la partie pied (30) dirigée axialement vers l'intérieur depuis la partie paroi s'étendant radialement en direction d'un disque de poulie (5) s'aboute avec une face de support (26) ou une partie épaulement sous la forme d'une partie paroi s'étendant radialement vers l'extérieur de l'arbre de manchon (2, 20).

6. Transmission selon la revendication précédente, **caractérisée en ce que** la hauteur radiale de la partie pied (30) est inférieure à celle de la face de support (26) de l'arbre de manchon (2, 20).

7. Transmission selon l'une quelconque des revendications précédentes, **caractérisée en ce que** la partie pied (30), au niveau du côté radialement intérieur et axialement extérieur, est dotée d'un renfoncement (32), de préférence de forme essentiellement rectangulaire, dont l'extension radiale est de préférence petite mais notable, et qui démarre à un emplacement situé axialement à l'extérieur au-delà de la transition (29), vu depuis la face de paroi axiale (27) en direction de l'autre face de paroi axiale (28).

8. Transmission selon l'une quelconque des revendications précédentes, **caractérisée en ce qu'**une partie de la partie paroi s'étendant radialement de la paroi (18), au moins à proximité de la transition (29) entre la partie paroi s'étendant radialement et ladite partie pied (30), est produite dans une épaisseur axiale inférieure à une épaisseur nominale de la partie paroi s'étendant radialement de la paroi (18) dans la direction axiale, mais de préférence supérieure aux trois quarts de ladite épaisseur axiale nominale.

9. Transmission selon la revendication précédente, **caractérisée en ce que** l'épaisseur axiale minimale est réalisée par la face de paroi axiale de forme régulière (27) et l'autre face de paroi axiale (28) de la paroi (18) convergeant légèrement l'une vers l'autre.

10. Transmission selon l'une des deux revendications précédentes, **caractérisée en ce qu'**une épaisseur axiale minimale de la paroi (18) est réalisée au niveau de la section de transition (29), laquelle est fournie alors de préférence régulièrement incurvée.

11. Transmission selon l'une quelconque des revendications précédentes, **caractérisée en ce que** le côté radialement intérieur de la partie pied (30), au niveau d'une extrémité axiale qui est dirigée vers le disque mobile axialement 5, est renfoncé sur une distance radiale d'environ 1 mm, de préférence de telle sorte que le renfoncement résultant est défini par une partie paroi (33) s'étendant partiellement dans la direction radiale selon un angle allant jusqu'à 40 degrés par rapport à la direction axiale générale de la partie pied (30).

12. Transmission selon l'une quelconque des revendications précédentes, **caractérisée en ce que** la section de transition (29) est produite dans un arrondi avec un rayon de courbure égal ou supérieur à 0,5 mm, mais inférieur à 1,5 mm.

13. Transmission selon l'une quelconque des revendications précédentes, **caractérisée en ce que** la partie paroi s'étendant radialement de la paroi (18), dans la direction radialement extérieure depuis la partie pied (30) de celle-ci, sur une partie substantielle de sa hauteur radiale, est inclinée vers le disque mobile axialement (5) de la poulie et, également sur une partie substantielle de sa hauteur radiale, est écartée dudit disque (5), de sorte que ladite partie paroi sur sa dite partie substantielle ne s'écarte pas du disque (5) au-delà de la section de transition (29).

14. Transmission selon la revendication précédente, **caractérisée en ce que** la partie pied (30) s'étend axialement jusqu à un point à l'intérieur de l'extension axiale d'un renfoncement extérieur radial (35) dans la paroi (18) pour recevoir un anneau d'étanchéité, et s'étend de préférence dans la direction axiale jusqu'à un point à l'intérieur de l'extension axiale de ladite surface de paroi axiale (27).

15. Transmission selon l'une quelconque des revendications précédentes, **caractérisée en ce que** ladite autre surface de paroi axiale (28) de la paroi (18) dans la direction intérieure radiale continue à être incurvée jusqu'au-delà du niveau de la circonférence extérieure radiale de la partie pied (30).

16. Transmission selon l'une quelconque des revendications précédentes, **caractérisée en ce que** la circonférence extérieure de l'arbre de manchon (2, 20) à l'emplacement où la paroi (18) est fixée est de diamètre sensiblement uniforme sur la longueur de la partie pied (30).
